# EUROPEAN PATENT APPLICATION

(11) **EP 2 645 548 A2**
(43) Date of publication of application: **02.10.2013**
(21) Application number: 13160164.3
(22) Date of filing: 20.03.2013
(51) Int. Cl.: H02K 9/22

(54) **IPM rotary electric machine with thermally conductive compound**

(30) Priority: 27.03.2012 US 201261616304 P
(71) Applicant: Remy Technologies, LLC, Pendleton, IN 46064 (US)
(72) Inventor: Hamer, Colin, Noblesville, IN Indiana 46060 (US); Chamberlin, Bradley D., Pendleton, IN Indiana 46064 (US); Creviston, Alex, Muncie, IN Indiana 47302 (US)
(74) Representative: Twelmeier Mommer & Partner

(57) **Abstract**

A synchronous electric machine includes a rotor having a substantially cylindrical core with axially extending slots, a plurality of permanent magnets configured as sets defining alternating poles in a circumferential direction, the permanent magnets being located in respective ones of the slots, and a thermally conductive material contiguous with the permanent magnets and the core for transferring heat of the permanent magnets, the material having a thermal conductivity of greater than 0.3 watts per (meter * Kelvin).

## Description

### BACKGROUND

The present invention relates generally to an interior permanent magnet (IPM) electric rotating machine such as a motor and, more particularly, to an IPM rotor structure that provides improved efficiency.

The use of permanent magnets generally improves performance and efficiency of electric machines. For example, an IPM type machine has magnetic torque and reluctance torque with high torque density, and generally provides constant power output over a wide range of operating conditions. An IPM electric machine generally operates with low torque ripple and low audible noise. The permanent magnets may be placed on the outer perimeter of the machine's rotor (e.g., surface mount) or in an interior portion thereof (i.e., interior permanent magnet, IPM). IPM electric machines may be employed in hybrid or all electric vehicles, for example operating as a generator when the vehicle is braking and as a motor when the vehicle is accelerating. Other applications may employ IPM electrical machines exclusively as motors, for example powering construction and agricultural machinery. An IPM electric machine may be used exclusively as a generator, such as for supplying portable electricity.

Rotor cores of IPM electrical machines are commonly manufactured by stamping and stacking a large number of sheet metal laminations. In one common form, these rotor cores are provided with axially extending slots for receiving permanent magnets. The magnet slots are typically located near the rotor surface facing the stator. Motor efficiency is generally improved by minimizing the distance between the rotor magnets and the stator. Various methods have been used to install permanent magnets in the magnet slots of the rotor. These methods may either leave a void space within the magnet slot after installation of the magnet or completely fill the magnet slot.

One of the simplest methods of installing a permanent magnet in a rotor is to simply slide the magnet into the slot and retain the magnet within the slot by a press-fit engagement between the slot and the magnet. This type of installation will typically result in axially extending void spaces located at opposite lateral ends of the magnet. If the electric machine is an oil cooled machine where oil is splashed on the rotor, the oil may collect in the void spaces in the magnet slots of the rotor. The collection of oil in the void spaces of the rotor is undesirable because it can lead to an unbalancing of the rotor.

Conventional IPM rotors are not adequately cooled and this results in lower machine output, and may result in demagnetization of permanent magnets or mechanical problems resulting from a hot rotor.

### SUMMARY

According to an embodiment, a synchronous electric machine includes a rotor having a substantially cylindrical core with axially extending slots, a plurality of permanent magnets configured as sets defining alternating poles in a circumferential direction, the permanent magnets being located in respective ones of the slots, and a thermally conductive compound contiguous with the permanent magnets and the core for transferring heat of the permanent magnets, the compound having a thermal conductivity of greater than 0.3 watts per (meter * Kelvin).

According to another embodiment, a method of forming a rotor of an interior permanent magnet (IPM) electric machine includes positioning a plurality of permanent magnets in a corresponding plurality of axially-extending magnet slots of a rotor core, and encapsulating the plurality of permanent magnets with a compound having a thermal conductivity of greater than 0.3 watts per (meter * Kelvin).

According to an advantageous refinement of the invention, the permanent magnets are encapsulated with a compound having a thermal conductivity of greater than 0.5 watts per (meter * Kelvin). Especially good results can be achieved by encapsulating the plurality of permanent magnets with a compound having a thermal conductivity of greater than 1.2 watts per (meter * Kelvin). For example, the permanent magnets can be encapsulated with a compound having a thermal conductivity of greater than 3.0 watts per (meter * Kelvin).

The foregoing summary does not limit the invention, which is defined by the attached claims. Similarly, neither the Title nor the Abstract is to be taken as limiting in any way the scope of the claimed invention.

### BRIEF DESCRIPTION OF THE DRAWING FIGURES

The above-mentioned aspects of exemplary embodiments will become more apparent and will be better understood by reference to the following description of the embodiments taken in conjunction with the accompanying drawings, wherein:

FIG. 1 is a schematic cross sectional view of an electric machine;

FIG. 2 is a perspective view of an interior permanent magnet (IPM) rotor of an electric machine;

FIG. 3 is a schematic view of a permanent magnet;

FIG. 4 is a top plan view of an interior permanent magnet (IPM) rotor of an electric machine;

FIG. 5 is an enlarged view of a portion of the rotor of FIG. 4, the portion grouped as a set of permanent magnets that may be defined as a magnetic pole;

FIG. 6 is a top plan view of an interior permanent magnet (IPM) rotor of an electric machine; and

FIG. 7 is an enlarged view of a portion of the rotor of FIG. 6, the portion grouped as a set of permanent magnets that may be defined as a magnetic pole.

Corresponding reference characters indicate corresponding or similar parts throughout the several views.

### DETAILED DESCRIPTION

The embodiments described below are not intended to be exhaustive or to limit the invention to the precise forms disclosed. Rather, the embodiments are chosen and described so that others skilled in the art may appreciate and understand the principles and practices of these teachings.

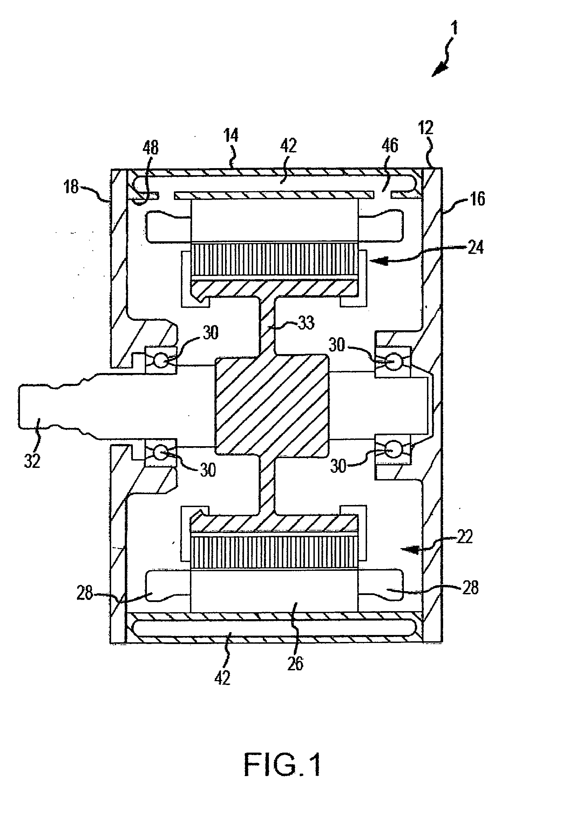

FIG. 1 is a schematic cross sectional view of an exemplary electric machine assembly 1. Electric machine assembly 1 may include a housing 12 that includes a sleeve member 14, a first end cap 16, and a second end cap 18. An electric machine 20 is housed within a machine cavity 22 at least partially defined by sleeve member 14 and end caps 16, 18. Electric machine 20 includes a rotor assembly 24, a stator assembly 26 including stator end turns 28, and bearings 30, and an output shaft 32 secured as part of rotor 24. Rotor 24 rotates within stator 26. Rotor assembly 24 is secured to shaft 34 by a rotor hub 33. In alternative embodiments, electric machine 20 may have a "hub-less" design.

In some embodiments, module housing 12 may include at least one coolant jacket 42, for example including passages within sleeve member 14 and stator 26. In various embodiments, coolant jacket 42 substantially circumscribes portions of stator assembly 26, including stator end turns 28. A suitable coolant may include transmission fluid, ethylene glycol, an ethylene glycol/water mixture, water, oil, motor oil, a gas, a mist, any combination thereof, or another substance. A cooling system may include nozzles (not shown) or the like for directing a coolant onto end turns 28. Module housing 12 may include a plurality of coolant jacket apertures 46 so that coolant jacket 42 is in fluid communication with machine cavity 22. Coolant apertures 46 may be positioned substantially adjacent to stator end turns 28 for the directing of coolant to directly contact and thereby cool end turns 28. For example, coolant jacket apertures 46 may be positioned through portions of an inner wall 48 of sleeve member 14. After exiting coolant jacket apertures 46, the coolant flows through portions of machine cavity 22 for cooling other components. In particular, coolant may be directed or sprayed onto hub 33 for cooling of rotor assembly 24. The coolant can be pressurized when it enters the housing 12. After leaving the housing 12, the coolant can flow toward a heat transfer element (not shown) outside of the housing 12 which can remove the heat energy received by the coolant. The heat transfer element can be a radiator or a similar heat exchanger device capable of removing heat energy.

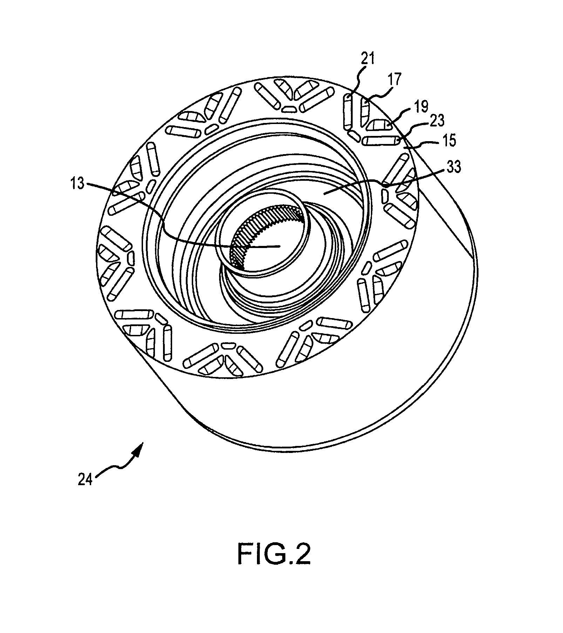

FIG. 2 is a perspective view of an IPM rotor 24 having a hub assembly 33 with a center aperture for securing rotor 24 to shaft 32. Rotor 24 includes a rotor core 15 that may be formed, for example, in a known manner as a stack of individual metal laminations, for example steel. Rotor core 15 includes a plurality of axially-extending magnet slots 17, 19, 21, 23 each having an elongated shape, for example an elongated oval shape. In addition, although variously illustrated herein with sharp corners and ends, magnet slots 17, 19, 21, 23 typically have rounded ends for reducing stress concentrations in the rotor laminations.

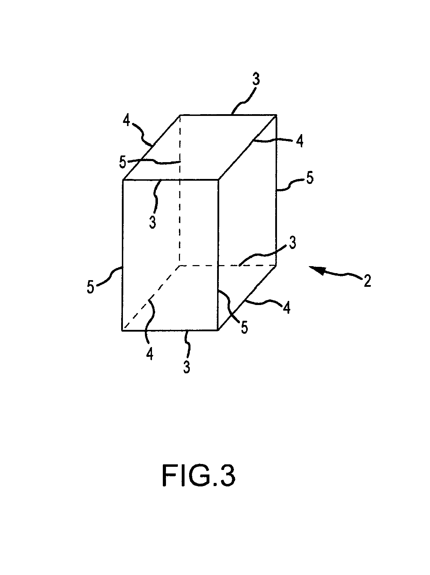

FIG. 3 shows an exemplary permanent magnet 2 formed as a rectangular column with a width defined as the linear dimension of any edge 3, a length defined as the linear dimension of any edge 4, and a height defined as a linear dimension of any edge 5. While a regular rectangular solid is described for ease of discussion, a permanent magnet of the various embodiments may have any appropriate shape. For example, magnets 2 may have rounded ends, sides, and/or corners. Respective areas bounded by edges 3, 4 may herein be referred to as magnet top and bottom. Respective areas bounded by edges 3, 5 may herein be referred to as magnet ends. Respective areas bounded by edges 4, 5 may herein be referred to as magnet lateral sides. Magnets 2 may have any appropriate size for being installed into the various magnet slots 17, 19, 21, 23. Magnets 2 are typically formed of rare-earth materials such as Nd (neodymium) that have a high magnetic flux density. Nd magnets may deteriorate and become demagnetized in the event that operating temperature is too high. When an electric machine is operating under a high temperature condition, the permanent magnets become overheated. For example, when a Nd magnet reaches approximately 320 degrees Celsius, it becomes demagnetized standing alone. When a combination of the temperature and the electric current of the machine becomes large, then demagnetization may also occur. For example, demagnetization can occur at a temperature of one hundred degrees C and a current of two thousand amperes, or at a temperature of two hundred degrees C and a current of two hundred amperes. As an electric machine is pushed to achieve greater performance, the increase in machine power consumption and associated power losses in the form of heat tests the stability of the magnets themselves. Therefore, it may be necessary to add Dy (dysprosium) to the magnet compound to increase the magnets' resistance to demagnetization. For example, a neodymium-iron-boron magnet may have up to six percent of the Nd replaced by Dy, thereby increasing coercivity and resilience of magnets 2. Although dysprosium may be utilized for preventing demagnetization of magnets 2, it is expensive, and the substitution of any filler for Nd reduces the nominal magnetic field strength. The Dy substitution may allow an electric machine to run hotter but with less relative magnetic field strength.

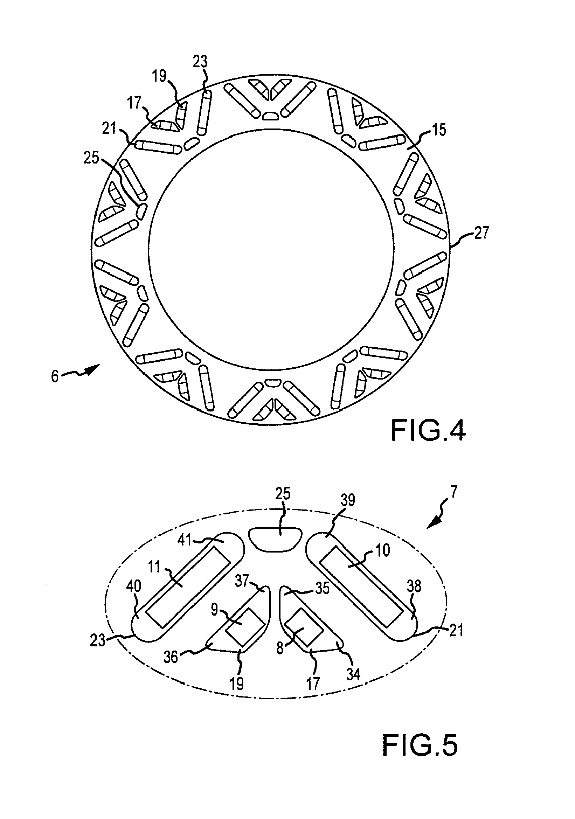

The example of FIG. 2 has ten sets of magnet slots, where each set includes magnet slots 17, 19, 21, 23, and where the sets define alternating poles (e.g., N-S-N-S, etc.) in a circumferential direction. Any appropriate number of magnet sets may be used for a given application. Magnet slots 17, 19, 21, 23 and corresponding magnets 2 may extend substantially the entire axial length of rotor core 15. FIG. 4 is a top plan view of a rotor assembly 6 having ten sets of magnet slots 17, 19, 21, 23, and FIG. 5 is an enlarged top view of one magnet set 7 thereof. Although various ones of magnet slots 17, 19, 21, 23 are shown with sharp edges, such edges may be rounded. After a permanent magnet 8 has been placed into magnet slot 17, there are gaps 34, 35 between the magnet 8 ends and the interior wall of slot 17. Similarly, after a permanent magnet 9 has been placed into magnet slot 19, there are gaps 36, 37 between the magnet 9 ends and the interior wall of slot 19. After a permanent magnet 10 has been placed into magnet slot 21, there are gaps 38, 39 between the magnet 10 ends and the interior wall of slot 21. After a permanent magnet 11 has been placed into magnet slot 23, there are gaps 34, 35 between the magnet ends and the interior wall of slot 23. Gaps 33-41 prevent a short-circuiting of magnetic flux when a direction of magnetization of respective ones of magnets is orthogonal to the magnet ends. When the magnet slots are located very close to the rotor exterior to maximize motor efficiency, only a thin bridge of rotor core material formed by the stacked laminations of the rotor separates magnet slots 17, 19, 21, 23 from the exterior surface 27 of the rotor. An epoxy, resin, thermoset (potting compound) or the like has conventionally been injected for securing NdFeB magnets in a rotor. For example, various electrically and thermally insulating materials have been used for securing permanent magnets in a vacuum-assisted resin transfer process.

There is generally a maximum power output according to the electromagnetic limit of an electric machine, where this ideal maximum power theoretically exists in a case where the electric machine experiences no losses. Such ideal power can be expressed as a maximum power for a short duration of time. In an actual electric machine operating in the real world, there are losses due to heat, friction, decoupling, and others. A maximum continuous power that is produced when the electric machine operates continuously may be increased by removing heat from the electric machine. A buildup of heat limits the ability of the machine to run continuously. By removal of heat from hotspots, the continuous power capacity of the electric machine is increased. Cooling of electric machines, for example, has conventionally included the use of cooling jackets around a stator and nozzles for spraying a coolant on end turns of stator coils. Conventional cooling of rotors has included forming coolant channels in the rotor.

In an exemplary embodiment, a nylon material ZYTEL (registered Trademark of E.I. du Pont de Nemours and Co.) may be injected into gaps 33-41 in a process that prevents air from becoming entrapped therein. In another exemplary embodiment, a resin material known as LNP Konduit compound (KONDUIT is a registered trademark of SABIC Innovative Plastics) of a type PTF-2BXX may be injected into gaps 33-41. In a further exemplary embodiment, an LNP Konduit compound PTF-1211 was used. The space 25 (e.g., FIGS. 4-5) may optionally be utilized for guiding the flux about permanent magnets 8-11 within a magnet set 7. For example, steel and/or resin may be selectively placed into or floated within space 25. In various embodiments, thermal conductivity of greater than 0.3 W/(m·K) was found to significantly increase output power. In other embodiments, a resin having thermal conductivity of greater than approximately 0.5 to 0.6 W/(m·K) was found to further increase output power while still providing acceptable structural performance. Other embodiments may have a resin with thermal conductivity of 1.4 W/(m·K), and a resin for some applications may be formed with thermal conductivity of 3.0 to 4.0 or greater, depending on the machine operating conditions related to temperature and current. For example, resin material may be created to have a desirable thermal conductivity but such may not be suitable for durability, electrical properties, structural integrity, high temperature stability, thermal expansion properties over a wide temperature range, cost, and other reasons. Thermally conductive plastics used for encapsulating permanent magnets may include polypropylene (PP), acrylonitrile butadiene styrene (ABS), polycarbonate (PC), nylon (PA), liquid-crystal polymers (LCP), polyphenylene sulfide (PPS), and polyetheretherketone (PEEK) as basic resins that are compounded with nonmetallic, thermally conductive reinforcements that dramatically increase thermal conductivities while having minimal effect on the base polymer's manufacturing process. Such thermally conductive polymers have conductivities that may range from 1 to 20 W/(m·K). Thermally conductive polymers generally have higher flexural and tensile stiffness, and lower impact strength compared with conventional plastics, and can be electrically conductive or non-conductive. In an exemplary embodiment a boron nitrate having a high thermal conductivity may be formed in a ceramic binder, whereby a thermal conductivity of the ceramic mixture may be as high as one hundred twenty-five W/(m·K) or more.

In an exemplary embodiment, magnets 8-11 are positioned into magnet slots 17, 19, 21, 23 for each magnet set 7 of rotor assembly 24. A resin having a thermal conductivity of 0.6 W/(m·K) is then injected to fill empty space of magnet slots 17, 19, 21, 23, including the space of gaps 34-41. In an alternative embodiment, permanent magnets 8-11 are dipped or otherwise encapsulated in the thermally conductive resin before insertion into magnet slots 17, 19, 21, 23. In such a case, high temperature (e.g., 500 degrees C) may be utilized in manufacturing without damage. In particular, all permanent magnets 8-11 of rotor assembly 24 may be magnetized after the rotor assembly has been completed. In addition, a high pressure may be utilized when injecting the resin. Tight tolerances for molds contain the pressure and assure that thin portions of the laminations of rotor body 15 are not thereby deformed. Elevated pressure allows air bubbles and other voids to be removed, whereby thermal conductivity is not compromised.

In an exemplary embodiment, a thermally conductive compound may be a liquid (e.g., melt) at least when it transfers into magnet slots 17, 19, 21, 23. For a thermally conductive ceramic, dynamic compaction may be used. For example, after magnets 8-11 are positioned into magnet slots 17, 19, 21, 23 for each magnet set 7 of rotor assembly 24, rotor body 15 is placed onto a vibration table, a powdered mixture of thermally conductive ceramic material is poured into magnet slots 17, 19, 21, 23, and the powder becomes compacted by vibration and/or force. Such a powder main contain thermally conductive polymers, and may contain alumina, boron nitride, or other suitable thermally conductive filler. A percentage of polymers may be small or zero, depending on a chosen binder material or other processing technique. For example, gaps 34-41 between magnets 8-11 and rotor body 15 are used as channels for receiving injected thermally conductive powder. A tamping rod or press bar may be placed at least partly into gaps 34-41 for assuring that the powder flows into empty space and becomes compacted. Processes, dies, and materials known to those skilled in pressed powder products may be employed. Such may include, but are not limited to, use of a binder for impregnating the packed powder, vacuum, and others. For example, resin may be placed into the powder before a heat process that melts the mixture, or the powder may be melted into rotor body 15 before adding a binder. Since permanent magnets are typically magnetized after rotor assembly, a heat of up to five-hundred degrees C may be used for encapsulating permanent magnets with thermally conductive powder. Any appropriate process may be utilized, for example potting, encapsulation, and/or molding according to methods known to those of ordinary skill in the art. For example, a use of thermally conductive powders may include coating the flakes or particles.

Magnetization of permanent magnets 8-11 for each magnet set 7 may be performed by magnetizing all rotor poles (i.e., magnet sets 7) simultaneously or individually after rotor assembly, or rotor poles may alternatively be magnetized prior to encapsulation.

In operation, heat of permanent magnets 8-11 is transferred by the thermally conductive resin, ceramic, or other compound into the lamination stack of rotor body 15. Permanent magnets 8-11 and the lamination stack of rotor body 15 both act as thermal conductors. When a hub 33 is part of rotor assembly 24, such hub 33 conducts the heat of the lamination stack. Oil or other coolant may be in fluid communication with hub 33, and a heat exchanger (not shown) such as an external oil cooler, or hub 33 may be in fluid communication with coolant of cooling jacket 42 (e.g., FIG. 1) for removing heat from the oil. As a result, the conventional problem of having permanent magnets as "hot spots" is obviated by encapsulating permanent magnet 8-11 with compound having thermal conductivity of greater than 0.3 W/(m·K), and preferably at least 0.55 to 0.6 W/(m·K). Performance testing of an IPM rotor having permanent magnets encapsulated by a compound with a thermal conductivity of 0.60 W/(m·K) shows a 25% or greater increase in machine output power. For example, an electric motor that provided 150 kilowatts/hour when structured with a plastic potting material having a thermal conductivity of approximately 0.2 W/(m·K) has a power output of up to 200 kilowatts/hour when structured with a plastic potting material having a thermal conductivity of approximately 0.55 W/(m·K). By removing heat from electric machine 1, limitations on continuous machine operation are greatly reduced. More output power is provided for a given temperature. By operating electric machine 1 closer to the theoretical design limit, electric machine 1 may be smaller and less expensive for providing a given amount of power.

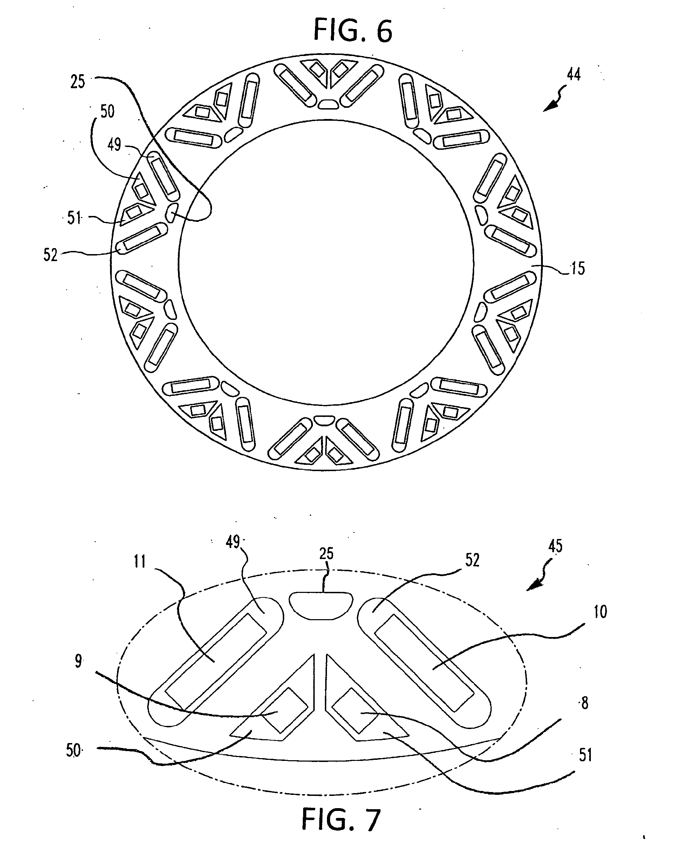

FIG. 6 is a top plan view of a rotor assembly 44 having ten sets of magnet slots 49-52, and FIG. 7 is an enlarged top view of one magnet set 45 thereof. Although various ones of magnet slots 49-52 are shown with sharp edges, such edges may be rounded. After a permanent magnet 8 has been placed into magnet slot 51, there are is a gap between magnet 8 and the interior wall of slot 51. Similarly, magnet slot 50 defines a gap around permanent magnet 9, magnet slot 52 defines a gap around permanent magnet 10, and magnet slot 49 defines a gap around permanent magnet 11. Permanent magnets 8-11 may be dipped in a thermally conductive compound and/or they may be inserted into corresponding magnet slots 49-52 and then be encapsulated as described above. In an embodiment, permanent magnets 8-11 may be encapsulated, installed, and then be further encapsulated after installation. By providing space in magnet slots 49-52 for accommodating at least one layer of thermally conductive compound, permanent magnets 8-11 may be more completely encapsulated. In an embodiment, permanent magnets are floated, magnetized, and finally bonded with an encapsulant into a static position based on magnetic alignment. Various molding and potting processes may be employed for a given application. For example, a thermal paste or a thermal grease may be installed in areas of particular interest for maximizing heat transfer according to coolant flow.

Other methods of installing permanent magnets in the slots may be used which do not result in any void spaces within the slot. For example, an adhesive or resinous material may be injected into the void spaces of the slot to completely fill the slot and securely hold the magnet within the slot. Materials such as nylon resins designed for toughness, structural integrity in high temperature, coefficient of linear thermal expansion, dielectric constant, chemical resistance, etc. are structurally well-suited for encapsulating or otherwise containing permanent magnets of a rotor. The present methods and apparatus may include appropriate structure and processes as disclosed in the following documents, all of which are incorporated herein by reference in their entirety: U.S. Patent No. 8,125,777; U.S. Patent No. 7,913,375; U.S. Patent No. 7,242,126; U.S. Patent No. 7,154,200; U.S. Patent No. 7,556,082; U.S. Patent No. 6,684,483; U.S. Patent Application Publication 2007/0228862; and, U.S. Patent Application Publication 2012/0025642.

While various embodiments incorporating the present invention have been described in detail, further modifications and adaptations of the invention may occur to those skilled in the art. However, it is to be expressly understood that such modifications and adaptations are within the spirit and scope of the present invention.

## Claims

1. A synchronous electric machine, comprising:
a rotor having a substantially cylindrical core with axially extending slots;
a plurality of permanent magnets being located in respective ones of the slots; and
a thermally conductive material contiguous with the permanent magnets and the core for transferring heat from the permanent magnets to the core, the material having a thermal conductivity of greater than 0.3 watts per (meter * Kelvin).

2. The electric machine of claim 1, wherein the thermally conductive material has a thermal conductivity of greater than 0.5 watts per (meter * Kelvin), preferably of greater than 1.2 watts per (meter * Kelvin), especially of greater than 3.0 watts per (meter * Kelvin).

3. The electric machine according to any one of the preceding claims, wherein the thermally conductive material fully encapsulates the permanent magnets.

4. The electric machine according to any one of the preceding claims, wherein the permanent magnets are configured as sets defining alternating poles in a circumferential direction.

5. A method of forming a rotor of an interior permanent magnet (IPM) electric machine, comprising:
positioning a plurality of permanent magnets in a corresponding plurality of axially-extending magnet slots of a rotor core;
encapsulating the plurality of permanent magnets with a material having a thermal conductivity of greater than 0.3 watts per (meter * Kelvin).

6. The method according to claims 5, wherein the permanent magnets are encapsulated in thermally conductive resin before insertion into the magnet slots.

7. The method according to claims 5 or 6, wherein the encapsulating comprises injecting a thermally conductive powder into the plurality of magnet slots.

8. The method of claim 7, further comprising dynamically compacting the conductive powder within the magnet slots.

9. The method of claim 8, wherein the dynamic compacting comprises vibrating the rotor.

10. The method according to any one of claims 7 to 9, wherein the powder comprises thermally conductive polymers.

11. The method of according to any one of claims 7 to 10, wherein the powder comprises ceramic material, preferably alumina and/or boron nitride.

12. The method according to any one of claims 7 to 11, further comprising melting the powder and then adding a binder to the thermally conductive material.

13. The method according to any one of claims 5 to 12, further comprising magnetizing the permanent magnets before and/or after the encapsulating.

14. The method according to any one of of claims 5 to 14, wherein the encapsulating is performed both before and after the positioning of the permanent magnets.

15. The method according to any one of of claim 5 to 14, further comprising floating the permanent magnets prior to completing the encapsulating, whereby the permanent magnets are finally bonded into a static position based on magnetic alignment.
